(19) Europäisches Patentamt / European Patent Office / Office européen des brevets

(11) **EP 2 270 518 B1**

(12) **FASCICULE DE BREVET EUROPEEN**

(45) Date de publication et mention de la délivrance du brevet:
**04.03.2015 Bulletin 2015/10**

(51) Int Cl.:
***G01P 5/26*** *(2006.01)* ***G01S 17/58*** *(2006.01)*

(21) Numéro de dépôt: **10164332.8**

(22) Date de dépôt: **28.05.2010**

(54) **Procédé de mesure de vitesse d'un aéronef, par anémométrie laser doppler**

Verfahren zur Geschwindigkeitsmessung eines Luftfahrzeugs durch Laser-Doppler-Anemometrie (LDA)

Method for measuring the speed of an aircraft, by laser Doppler anemometry.

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **23.06.2009 FR 0903042**

(43) Date de publication de la demande:
**05.01.2011 Bulletin 2011/01**

(73) Titulaire: **Thales**
**92200 Neuilly Sur Seine (FR)**

(72) Inventeurs:
• **Lacondemine, Xavier**
**26000 VALENCE (FR)**
• **Schlotterbeck, Jean-Pierre**
**26300 ROCHEFORT-SAMSON (FR)**
• **Renard, Alain**
**26120 CHABEUIL (FR)**

(74) Mandataire: **Esselin, Sophie**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 703 468 GB-A- 2 079 466**
**US-A1- 2004 109 155**

• **CRONIN P J ET AL: "Minimum theoretical requirements for three-dimensional scanning-laser Doppler anemometry" APPLIED OPTICS OPT. SOC. AMERICA USA, vol. 39, no. 34, 1 décembre 2000 (2000-12-01), pages 6350-6359, XP002566510 ISSN: 0003-6935**

**Description**

Le domaine de l'invention est celui des procédés de mesure de vitesse d'un aéronef par anémométrie laser Doppler au moyen d'au moins un Lidar (de l'anglo-saxon "Light Detection and Ranging") dans lequel l'émission est réalisée par exemple par un laser (de l'anglo-saxon, "Light Amplification by Stimulated Emission of Radiation") à émission continue.

Ce type de procédé consiste à mesurer le décalage de fréquence entre une onde de référence émise et une onde rétrodiffusée par les aérosols naturels de l'air, utilisés comme traceurs de vitesse, situés sur l'axe de visée. Ce décalage est représentatif de la projection, sur l'axe de visée, de la vitesse de l'aéronef relativement à l'air. Pour effectuer des mesures de référence, on focalise généralement sur une zone de focalisation choisie suffisamment loin de l'aéronef pour que la masse d'air qui s'y trouve soit aussi peu perturbée que possible par l'aéronef. Dans ce cas, l'onde rétrodiffusée est issue principalement des traceurs se trouvant dans la zone de focalisation.

L'information utile, portée par le décalage de fréquence Doppler, est obtenue en effectuant une détection de type cohérent. Une onde issue d'une source de lumière cohérente est séparée en deux. Une première onde appelée « faisceau émis » est envoyée dans la zone de focalisation et une seconde onde appelée « oscillateur local » constitue une référence pour la détection cohérente du décalage de fréquence Doppler.

Les aérosols présents naturellement dans l'atmosphère rétrodiffusent la lumière du faisceau émis. Le faisceau émis est rétrodiffusé à une fréquence décalée d'un décalage Doppler $\Delta fi$ par rapport à la fréquence du faisceau émis. Le signal rétrodiffusé est mélangé avec l'onde de référence pour former un battement hétérodyne sur la surface photosensible d'un détecteur.

L'écart Doppler $\Delta fi$, sur un axe de visée Xi, est l'écart entre la fréquence $fi$ du signal rétrodiffusé et la fréquence F de l'oscillateur local. Il permet de déduire une mesure de la projection, sur l'axe de visée Xi, de la vitesse relative de l'aéronef par rapport au milieu ambiant, c'est-à-dire par rapport à la masse d'air se trouvant dans la zone de focalisation. L'expression qui lie ces deux grandeurs est la suivante:

$$vi = \Delta fi \,.\, \lambda / 2 \qquad (A)$$

vi étant la projection sur la ligne de visée Xi, du vecteur vitesse de l'aéronef par rapport à la masse d'air se trouvant sur l'axe de visée ou dans la zone de focalisation.

$\lambda$ étant la longueur d'onde du faisceau émis dans le milieu.

L'écart Doppler $\Delta fi$ sur une ligne de visée Xi est obtenu classiquement par l'analyse du signal rétrodiffusé. Parmi les méthodes utilisables, l'analyse spectrale par transformée de Fourier est généralement utilisée.

Le vecteur vitesse d'un aéronef est calculé à partir des composantes vi du vecteur vitesse suivant trois axes de visée non coplanaires, les composantes du vecteur vitesse vi étant obtenues par l'équation (A) à partir des écarts Doppler $\Delta fi$ des signaux rétrodiffusés sur les axes de visée concernés. Ce vecteur vitesse est exprimé sous la forme d'une Vitesse Vraie généralement nommée TAS (de l'anglo-saxon "True Air Speed") et des angle d'incidence et de dérapage généralement nommées AOA ( de l'anglo-saxon, "Angle Of Attack") et SSA (de l'ango-saxon, "Side Slip Angle")

La fréquence du signal rétrodiffusé est déterminée à partir de la fréquence de la raie présente sur le spectre du signal rétrodiffusé.

Cependant, lorsqu'un aéronef se déplace dans une masse d'air inhomogène en termes de vitesse, c'est-à-dire lorsque qu'il existe plusieurs masses d'air se déplaçant à des vitesses différentes, il n'est pas possible de déterminer de manière fiable les composantes du vecteur vitesse sur les axes de visée car il est parfois impossible de déterminer une fréquence unique sur les spectres des signaux rétrodiffusés sur les axes de visée. C'est le cas lorsqu'on est en présence de nuages lointains, de turbulences, d'échos de sol ou de perturbations de type vortex de sillage.

Les procédés de détermination de la vitesse de l'aéronef connus présentent l'inconvénient, soit de déterminer une vitesse dont la valeur peut être fausse (le pilote ignorant que la valeur qui lui est fournie n'est pas fiable), soit de ne pas déterminer de vecteur vitesse (la vitesse de l'aéronef est alors indisponible). La demande de brevet publiée avec le numéro US2004/109155 décrit un procédé de mesure de la vitesse d'un aéronef par rapport au sol ou par rapport à un autre aéronef par anémométrie Laser Doppler en réalisant une modulation en fréquence de la sortie d'un laser. Dans le document D1 on n'élabore pas des vecteurs vitesses candidats, on élimine les composantes des vitesses qui ne sont pas cohérentes avant de calculer un vecteur vitesse, et on ne calcul pas non plus le spectre du signal rétrodiffusé sur 4 axes de visée. La demande de brevet publiée avec le numéro EP0703468 décrit un procédé de mesure de la vitesse d'un aéronef à un instant donné, par anémométrie laser Doppler longitudinale. Les composantes du vecteur vitesse air sont obtenues en mesurant le décalage Doppler sur les axes de visée. La demande de brevet publiée avec le numéro D3 GB 2079 466 décrit un procédé pour détecter une erreur sur la sortie d'un capteur utilisé dans l'aéronautique (par exemple un gyrolaser, un accéléromètre...). Lorsque le taux de variation de la sortie du capteur est trop important par rapport à une manoeuvre réalisable par l'aéronef, une faute est détectée.

Les inconvénients précités sont spécifiques aux lasers qui émettent continûment un spectre étroit. Un procédé basé sur un laser pulsé ne présente pas ces inconvénients mais ce procédé est plus coûteux et moins précis, pour les mesures de vitesse, qu'un procédé basé sur un laser à émission continue car les spectres issus des signaux rétrodiffusés sont spectralement plus étalés.

Le but de l'invention est de proposer un procédé de détermination de la vitesse d'un aéronef par rapport à une masse d'air qui soit précis, peu coûteux, fiable, ou avec une fiabilité connue et qui présente une bonne disponibilité, même lorsque la masse d'air dans laquelle se trouve l'avion est inhomogène.

A cet effet l'invention a pour objet des procédés de mesure de la vitesse d'un aéronef à un instant donné, par anémométrie laser Doppler selon les revendications 1, 3 et 10.

Le procédé peut également comprendre les caractéristiques des revendications dépendantes 2, 4 à 9 et 11 à 14.

$$COHij = \prod_{1}^{N} \exp(-\frac{Ri}{Ps}) \,;$$

Le procédé selon l'invention permet d'améliorer la fiabilité de la mesure de la vitesse d'un aéronef lorsque celui-ci se trouve dans un environnement inhomogène en termes de vitesse. Plus particulièrement, le procédé selon l'invention permet d'améliorer la fiabilité de la mesure de la vitesse d'un aéronef dans un environnement nuageux ou lorsqu'au moins un axe de visé est orienté vers le sol.

Ce procédé permet en outre d'augmenter la disponibilité de la mesure de vitesse dans un environnement inhomogène en termes de vitesse. Il ne dégrade pas la précision sur la mesure de vitesse lorsque l'environnement est homogène.

Il permet en outre au système utilisateur (pilote ou système de pilotage automatique) recevant l'information sur la vitesse de l'aéronef de choisir de se servir de l'information de vitesse ou non, selon le niveau de fiabilité de l'information qui lui est transmise.

Le procédé selon le second mode de réalisation de l'invention permet d'améliorer la fiabilité de la mesure de la vitesse d'un aéronef dans un environnement perturbé par des perturbations du type vortex.

D'autres caractéristiques et avantages de l'invention apparaîtront à la lecture de la description détaillée qui suit, faite à titre d'exemple non limitatif et en référence aux dessins annexés dans lesquels :

- la figure 1 est une représentation schématique d'un aéronef se déplaçant dans une masse d'air,
- les figures 2a, 2b, 2c et 2d représentent respectivement des exemples de spectres de signaux rétrodiffusés en fonction de leur fréquence selon un premier, un deuxième, un troisième et un quatrième axes de visée,
- la figure 3a est une représentation schématique du gain de la fonction de focalisation du faisceau laser en fonction de la distance à l'aéronef; la figure 3b est une représentation schématique d'un exemple de coefficient de rétrodiffusion d'une masse d'air en fonction de sa distance à un aéronef,
- la 4a est une représentation schématique d'un spectre d'un signal rétrodiffusé en fonction de sa fréquence, sur un axe de visée sur lequel il existe une perturbation de type turbulence,
- la figure 4b est une représentation schématique d'un spectre d'un signal rétrodiffusé en présence d'une couche nuageuse portée par un vent plus fort,
- la figure 5 est une représentation schématique de deux vecteurs vitesse candidats obtenus à partir de 3 axes de mesure ainsi que de leurs projections sur un axe de visée supplémentaire; sur la figure 5, on a également représenté les spectres des signaux rétrodiffusés représentés sur les figures 2a à 2d, en fonction de la vitesse, sur les axes de visée.

D'une figure à l'autre, les mêmes éléments sont repérés par les mêmes références.

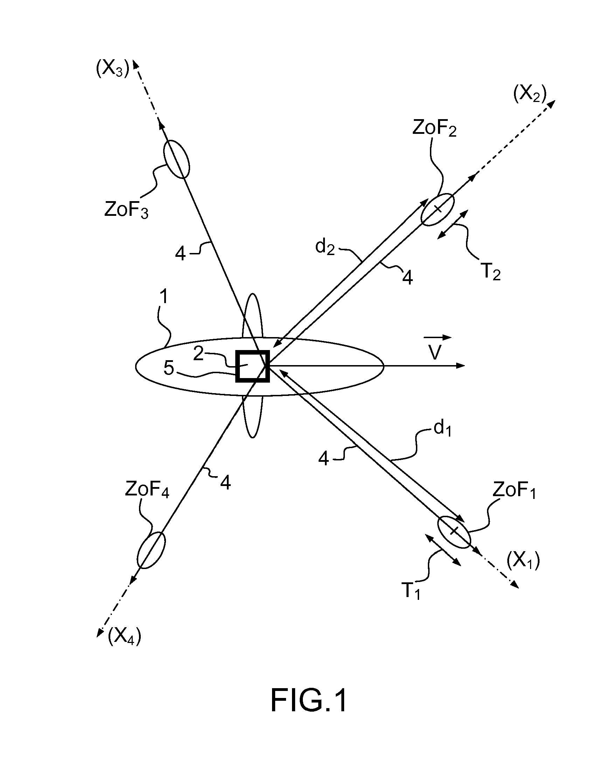

La figure 1 illustre un aéronef 1 équipé d'un laser 2 émettant continûment des faisceaux, appelés faisceaux émis 4 à une longueur d'onde λ. L'aéronef est animé d'une vitesse $\vec{V}$ relativement à une masse d'air. Le procédé de mesure de la vitesse $\vec{V}$ est basé sur une technique d'anémométrie laser Doppler.

A cet effet, on focalise les faisceaux émis 4 sur chacun des axes Xi dans une zone de focalisation $ZOF_i$. Une zone de focalisation est choisie de manière à ce que le mouvement de la masse d'air dans cette zone soit indépendant de celui de l'avion ou suive un modèle prédéfini. La zone de focalisation $ZOF_i$ sur un axe de visée est une zone située à une distance moyenne de l'aéronef appelée distance de focalisation $d_i$ et dont l'épaisseur, sur l'axe de visée, est appelée épaisseur de la zone de focalisation $T_i$. Sur la figure 1, on a représenté les zones de focalisation $ZOF_1$, $ZOF_2$, $ZOF_3$, $ZOF_4$. Pour plus de clarté, on n'a représenté sur la figure 1 que les épaisseurs $T_1$ et $T_2$ des axes $X_1$ et $X_2$ ainsi que les distances de focalisations associées $d_1$ et $d_2$.

La distance de focalisation est choisie en fonction de la taille et de la dynamique de l'aéronef. En variante, on ne focalise pas les faisceaux laser. Le procédé utilise généralement la même optique pour l'émission et la réception mais on peut tout à fait envisager d'utiliser des optiques d'émission et de réception différentes. Les faisceaux sont émis par un unique laser mais on peut envisager d'envoyer des faisceaux provenant chacun d'un laser différent.

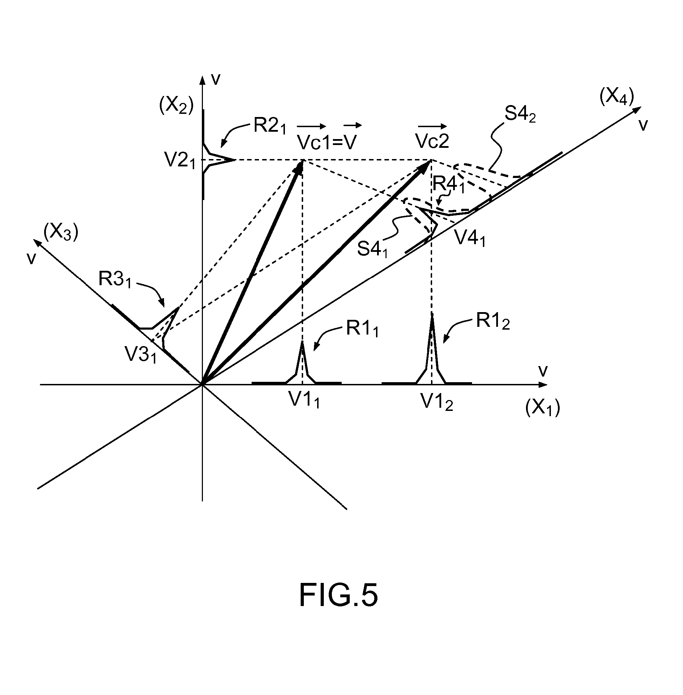

On envoie des faisceaux 4 selon trois premiers axes de visée X1, X2, X3 et selon au moins un axe supplémentaire X4. Dans le mode de réalisation représenté sur les figures 1 et 5, on a utilisé uniquement 4 axes de visée. Dans un souci de simplicité, on a représenté les 4 axes de visée sur un espace à deux dimensions mais ces axes ne sont pas coplanaires. Chaque axe de visé Xi est orienté. Les axes de visée ne sont pas confondus entre eux. i est l'indice d'un axe de visée Xi. i= 1,...,N. N est le nombre d'axes de visée Xi utilisés dans le procédé.

Les aérosols présents dans l'air sur un axe de visée rétrodiffusent le faisceau émis et produisent un signal rétrodiffusé sur cet axe de visée. On capte les signaux rétrodiffusés au moyen d'un détecteur 5 lors d'une étape d'acquisition des signaux rétrodiffusés.

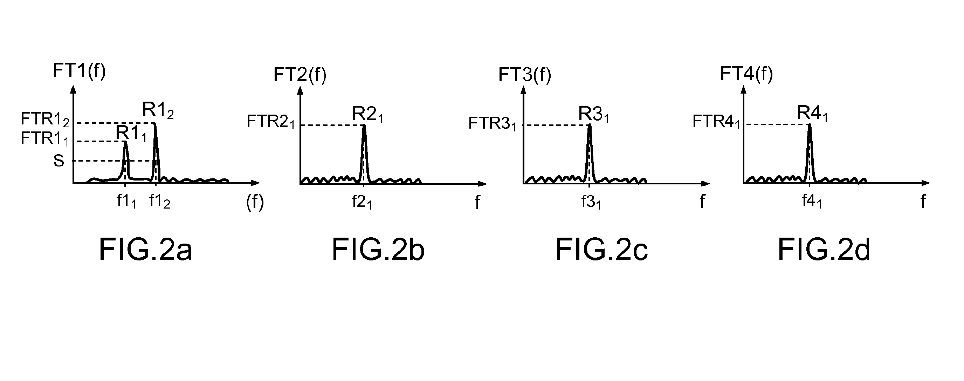

Sur les figures 2a, 2b, 2c, 2d, on a représenté un exemple de spectres de signaux rétrodiffusés sur le premier axe de visée X1 (figure 2a), sur le second axe de visée X2 (figure 2b), sur le troisième axe de visée X3 (Figure 2c) ainsi que sur le quatrième axe de visée X4 (figure 2d).

Le spectre FTi(f) du signal rétrodiffusé sur l'axe de visé Xi s'exprime en fonction de la fréquence f de ce signal. Il s'agit par exemple de la transformée de Fourier du signal.

Lorsque le signal rétrodiffusé est issu d'aérosols se déplaçant tous à la même vitesse, le signal rétrodiffusé présente une fréquence unique. Le spectre de ce signal présente une unique raie de puissance importante, comme visible sur les figures 2b, 2c et 2d. Toutefois, comme représenté sur la figure 2a, lorsque plusieurs types d'aérosols présentant des vitesses différentes sont présents sur l'axe de visée, l'énergie du signal rétrodiffusé est répartie sur plusieurs fréquences.

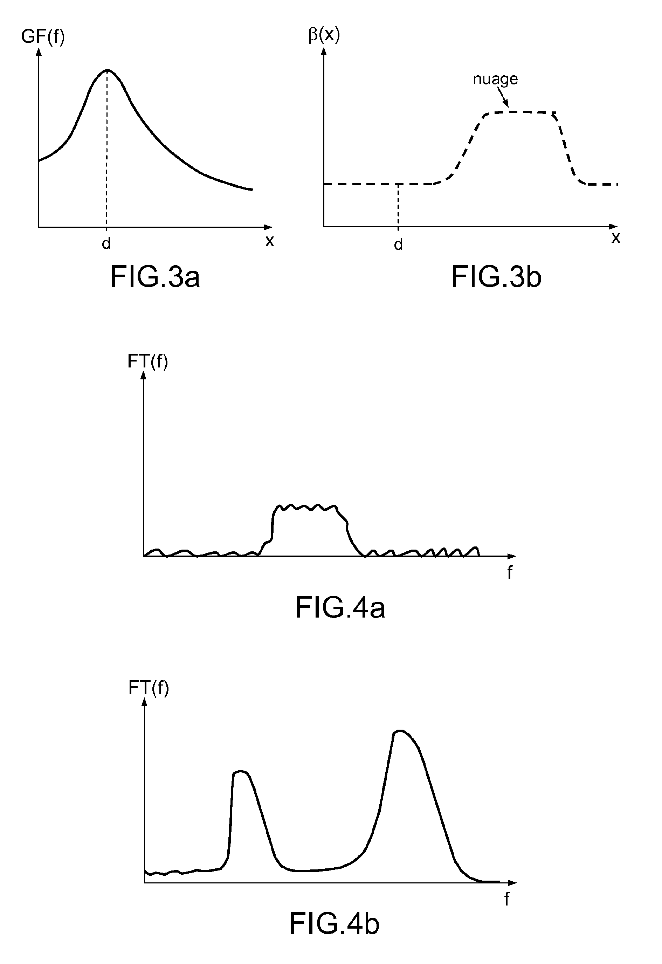

Avec les procédés de l'art antérieur utilisant l'information provenant uniquement de trois axes de visée, la composante du vecteur vitesse sur l'axe de visée concerné a plusieurs valeurs possibles et on ne sait pas identifier quelle est la composante utile. C'est par exemple le cas lorsque la masse d'air présente dans la zone de focalisation forme un vortex dans lequel la vitesse des aérosols est répartie sur un intervalle de vitesse. On a représenté schématiquement sur la figure 4a un exemple de spectre du signal issu de la rétrodiffusion par une perturbation de type vortex. La majorité de la puissance du signal est étalée sur une plage de fréquence finie. Il n'est pas possible d'identifier avec précision la fréquence du signal. On ne peut pas en déduire de façon fiable et précise une composante du vecteur vitesse sur l'axe de visée. Sur la figure 4b, on a représenté schématiquement un spectre d'un signal rétrodiffusé en présence d'une couche nuageuse située à distance de l'aéronef et portée par un vent plus fort que la masse d'air située dans la zone de focalisation. L'intensité du signal est répartie sur deux gaussiennes de même hauteur. Il n'est pas possible de reconnaitre le signal rétrodiffusé par la couche nuageuse du signal utile sur des critères liés à l'allure spectrale. Le même problème se pose lorsque l'axe de visée est dirigé vers le sol et qu'un écho sol vient s'ajouter au signal utile.

Pour un spectre présentant deux raies d'intensité importante, comme représenté sur la figure 2a, une solution serait de discriminer la raie utile (issue de la masse d'air dans la zone de focalisation) de la raie parasite (issue du nuage ou du sol) en se basant sur la valeur du spectre ou sur la fréquence de celle-ci mais ces méthodes ne sont pas fiables. En effet, on ne sait pas déterminer lequel du nuage ou de la masse d'air circule le plus vite.

De plus, le gain de la fonction de focalisation GF(x) du faisceau incident ne présente pas une sélectivité spatiale suffisante pour que le signal issu de la rétrodiffusion par des porteurs situés en dehors de la zone de focalisation soit suffisamment atténué pour ne pas être capté par le détecteur.

Sur la figure 3a, on a représenté le gain de la fonction de focalisation GF (x) sur un axe de focalisation en fonction de la distance x à un aéronef. Le gain de la fonction de focalisation GF (x), comme visible sur la figure 3a, est une gaussienne maximale à la distance de focalisation.

La puissance IT du signal rétrodiffusé par une masse d'air située à une distance x de l'aéronef est donnée par :

$$IT(x) = GF(x) *\beta(x)$$

$\beta(x)$ est le coefficient de rétrodiffusion de la masse d'air à la distance x. Le coefficient de rétrodiffusion $\beta(x)$ d'une masse d'air dépend des caractéristiques des traceurs et de leur nombre dans la masse d'air.

Sur la figure 3b, on a représenté schématiquement un exemple de variation du coefficient de rétrodiffusion de la masse d'air entourant un avion. La masse d'air a un faible coefficient de rétrodiffusion autour de la distance d de focalisation, et un plateau ayant un fort coefficient de rétrodiffusion à distance importante de l'aéronef. Ce profil est caractéristique de la présence d'un nuage sur l'axe de visé concerné à une distance importante d'un aéronef. Même si un nuage ou le sol qui présentent des coefficients de rétrodiffusion importants se trouvent en dehors de la zone de focalisation, à une distance où la fonction de focalisation est faible, la contribution (en intensité) au signal rétro-diffusé est non négligeable. Il n'existe pas de relation biunivoque entre l'intensité du signal rétro-diffusé et la distance aux traceurs contributeurs. On ne peut pas se baser sur la puissance du spectre pour différencier deux raies d'un spectre du type de celui de la figure 2a.

Ainsi, dans le procédé selon l'invention, on se propose d'utiliser la redondance apportée par l'acquisition d'un signal rétrodiffusé sur au moins un axe de visée supplémentaire, c'est-à-dire sur au moins un quatrième axe de visée, pour calculer le vecteur vitesse de l'aéronef. Dans la suite de la description, on s'intéressera tout d'abord au cas où on utilise un seul axe de visée supplémentaire puis on généralisera au cas où on a plusieurs axes de visée supplémentaires.

Après acquisition des signaux sur les 4 axes de visée, on calcule le spectre de chaque signal rétrodiffusé sur chacun de ces axes. On calcule les vecteurs vitesse candidats $\vec{V}c$ et leurs cohérences respectives qui sont fonction des projections des vecteurs candidats sur au moins un axe de visée, appelé axe de calcul X1, X2, X3, X4 et en fonction des spectres FT1(V), FT2(V), FT3(V), FT4(V) des signaux rétrodiffusés sur le (ou les) axe(s) de calcul respectifs X1, X2, X3, X4. Le vecteur vitesse V de l'aéronef est choisi parmi les vecteurs vitesse candidats Vc en faisant une analyse de vraisemblance de leurs cohérences COH.

On notera que les spectres de puissance en vitesse FT1(V), FT2(V), FT3(V), FT4(V) des signaux rétrodiffusés sur les axes de visée respectifs X1, X2, X3, X4 sont directement proportionnels aux spectres FT1(f), FT2(f), FT3(f), FT4(f) représentés en fréquence sur les figures 2a à 2d.

Dans un premier et un deuxième mode de réalisation selon l'invention, les vecteurs vitesse candidats sont construits à partir des raies identifiées sur les spectres des signaux rétrodiffusés sur des axes de visée. Plus précisément, les vecteurs vitesse candidats sont construits à partir des raies identifiées sur les spectres des signaux rétrodiffusés sur au moins 3 axes de visée.

Dans un premier mode de réalisation selon l'invention, le vecteur vitesse V est choisi en suivant le procédé décrit ci-après. On sélectionne sur chacun des axes de visée X1, X2, X3, X4, une ou plusieurs raies. Une raie est identifiée lorsqu'elle vérifie un critère de sélection de raie prédéterminé. Un critère de sélection de raie peut consister à identifier une raie lorsque la valeur du spectre du signal dépasse un seuil S prédéterminé. Le spectre est filtré par un opérateur adapté au signal attendu, par exemple, par une gaussienne dont les caractéristiques correspondent à la turbulence attendue de la masse d'air.

Une première raie est identifiée à la fréquence à laquelle la valeur du spectre filtré est maximale et supérieure au seuil S. La raie suivante est déterminée par le même procédé après avoir éliminé du spectre une plage de fréquence se trouvant autour de la fréquence de la première raie identifiée. Le processus de détection de raies s'arrête lorsqu'il n'y a plus de maximum dépassant le seuil S. D'autres principes de détection de raies sont possibles afin de s'adapter au mieux des caractéristiques du matériel. Une raie est par exemple identifiée lorsqu'un pourcentage minimum de l'énergie du spectre est confiné dans un intervalle de fréquence restreint.

Sur les exemples de spectres représentés sur les figures 2a à 2d, on obtient deux raies identifiées $R1_1$ et $R1_2$ sur le premier axe X1 dont les valeurs respectives du spectre $FTR1_1$, $FTR1_2$ (ou puissance transportée à ces fréquences) sont supérieures au seuil prédéterminé S. Ces raies sont centrées sur des fréquences de raies $f1_1$, $f1_2$ qui correspondent respectivement à des composantes de vitesse $V1_1$ et $V1_2$ sur le premier axe (voir figure 5.) On associe un écart type $E1_1$ et $E1_2$ aux raies identifiées. On a identifié une unique raie $R2_1$, $R3_1$, $R4_1$ sur chacun des deuxième X2, troisième X3 et quatrième X4 axes de visée, centrées sur des fréquences de raie respectives $f2_1$, $f3_1$, $f4_1$ qui correspondent respectivement à des composantes de vitesse $V2_1$, $V3_1$ et $V4_1$. Les valeurs du spectre pour ces raies sont respectivement $FTR2_1$, $FTR3_1$, $FTR4_1$. On associe aux raies identifiées des écarts types respectifs $E2_1$, $E3_1$ et $E4_1$ qui sont fonction de la forme des raies correspondantes.

On sélectionne trois axes, appelés axes de base. Les axes de base sont sélectionnés à partir d'un critère de sélection prédéterminé. Les axes de visée non sélectionnés sont appelés axes de redondance.

A partir des axes de base, on construit des vecteurs vitesse candidats dont les composantes sur les trois axes de base sont les composantes en vitesse associées aux raies identifiées sur ces axes de base. Autrement dit, on construit à partir des raies identifiées sur les axes de base les vecteurs à 3 dimensions possibles qui présentent sur chaque axe de base, une composante en vitesse égale à la composante en vitesse associée à une raie identifiée sur l'axe de base considéré. Une raie sur chacun des 3 axes de base conduit à un seul vecteur candidat. Si un axe possède 2 raies, et deux axes possèdent une raie, on obtient deux vecteurs candidats. Si deux axes possèdent 2 raies et un axe possède une raie, on obtient 4 vecteurs candidats et ainsi de suite.

De préférence, le critère de sélection des trois axes de base consiste à choisir les axes de visée dont le spectre présente le moins de raies de sorte à produire un nombre minimum de vecteurs vitesse candidats ce qui permet de limiter le coût du procédé en termes de calculs.

Comme représenté sur la figure 5, en prenant les exemples de spectres représentés sur les figures 2a, 2b, 2c, à partir des raies identifiées $R1_1$, et $R1_2$ sur le premier axe de visée X1, de la raie $R2_1$ sur X2 et de la raie $R3_1$ sur X3, on construit deux vecteurs vitesse candidats $\vec{V}c1$ et $\vec{V}c2$. Les axes X1 et X2 sont situés dans le plan de la feuille contrairement aux axes X3 et X4. Les projections des vecteurs candidats sur les axes X3 et X4 sont orthogonales mais les traits pointillés représentant ces projections sur la figure 5 ne forment pas des angles droits avec ces axes car ils n'appartiennent pas au plan de la feuille.

On projette ensuite les vecteurs candidats sur des axes de calcul. Dans le mode de réalisation représenté sur la figure 5, l'axe de calcul est l'axe de redondance X4, on projette les deux vecteurs candidats $\vec{V}c1$ et $\vec{V}c2$ sur l'axe X4, on a également représenté des signaux attendus $S4_1(V)$ et $S4_2(V)$ sur l'axe de redondance X4, des deux vecteurs vitesse candidats $\vec{V}c1$ et $\vec{V}c2$.

On associe en effet à chaque projection du vecteur candidat d'indice j sur un axe de redondance d'indice i un signal attendu $Si_j(V)$ sur l'axe de redondance. Le signal attendu sur un axe de redondance Xi est centré sur la projection du vecteur candidat sur ledit axe. Autrement dit la puissance du signal attendu est maximale au niveau de la projection du vecteur candidat sur l'axe de redondance considéré. On peut associer à ce signal attendu une forme et une puissance dépendant de la puissance et de la forme des raies à partir desquelles le vecteur vitesse candidat est construit. Par exemple, comme représenté sur la figure 5, le signal attendu représenté en traits pointillés est une gaussienne centrée autour de la projection du vecteur candidat sur ledit axe supplémentaire. L'écart type Ec du signal attendu est estimé en fonction des écarts types des raies candidates identifiées sur les axes de mesure.

On calcule ensuite la cohérence COH des vecteurs candidats. On appelle cohérence individuelle COHi entre un vecteur candidat et le signal rétrodiffusé sur un axe de calcul d'indice i, la grandeur caractérisant la concordance entre le signal attendu, issu de la projection du vecteur candidat sur l'axe de calcul considéré, et le spectre du signal rétrodiffusé sur l'axe de calcul considéré. On donnera par la suite plusieurs exemples non limitatifs de calcul de la cohérence.

La cohérence individuelle entre le vecteur vitesse candidat d'indice j et un axe de calcul Xi est par exemple égale à la corrélation CORij entre le signal attendu sur l'axe de calcul et le spectre du signal rétrodiffusé sur l'axe de redondance Xi. La corrélation CORij est alors calculée de la manière suivante :

$$CORij = \int_0^\infty Si_j(V) * FTi(V)dV$$

Ci-dessus, comme dans la suite du texte, les calculs de cohérence sont réalisés en fonction de la vitesse mais on pourrait de façon équivalente les écrire en fonction de la fréquence f d'un signal rétrodiffusé sur cet axe, cette fréquence étant reliée à la vitesse et à la fréquence de l'oscillateur local par l'équation A.

Dans le premier mode de réalisation les axes de calcul étant les axes de redondance, on calcule les cohérences individuelles sur les axes de redondance.

Dans l'exemple représenté sur la figure 5, dans lequel on a un axe de redondance X4 la corrélation COR41 est importante car le signal attendu associé à $\vec{V}c1$ se superpose avec une raie d'intensité importante du spectre du signal rétrodiffusé sur l'axe X4. A l'inverse, la valeur de la corrélation COR42 est très faible car le signal attendu associé à $\vec{V}c2$ se superpose avec une zone du spectre du signal rétrodiffusé sur l'axe X4 dont l'intensité est très faible.

En variante, la cohérence individuelle entre un vecteur candidat et un axe de calcul est calculée par la méthode des moindres carrés à partir de la projection du vecteur candidat d'indice j sur l'axe de calcul d'indice i et le spectre du signal rétrodiffusé sur cet axe.

Dans un premier exemple, on calcule la somme SCji des carrés des écarts, appelée somme des résidus, entre le signal attendu du vecteur candidat d'indice j et le spectre du signal rétrodiffusé sur l'axe de calcul d'indice i.

$$SC4j = \int_0^\infty (S4_j(V) - FT4(V))^2 dV$$

La cohérence individuelle est alors :

$$COHij = e^{\frac{SCij}{SC0}}$$

où SCO représente le résidu attendu ou son estimée, il s'agit d'une valeur prédéterminée dépendant de l'application. Il est par exemple déterminé par un compromis entre les performances représentées par la probabilité de détection de la vitesse et la probabilité de fausses alarmes. Plus on choisit une probabilité de fausse alarmes faible, plus la probabilité de détection de la vitesse est faible.

Dans un second exemple moins coûteux que le premier en termes de calcul on calcule la somme des résidus à partir de la fréquence (ou vitesse) de la projection vecteur candidat d'indice j sur l'axe d'indice i et de la fréquence moyenne (ou vitesse moyenne) du spectre du signal rétrodiffusé sur l'axe de calcul d'indice i. La somme des résidus est égale au carré de la différence entre la fréquence (ou vitesse) de la projection vecteur candidat d'indice j sur l'axe d'indice i et la fréquence (ou vitesse) moyenne du signal rétrodiffusé sur l'axe d'indice i.

La cohérence individuelle est alors :

$$COHij = e^{\frac{(fi - fpj)^2}{Fs0}}$$

fi est fréquence moyenne du spectre du signal rétrodiffusé sur axe d'indice i fpj est la fréquence de la projection du vecteur candidat d'indice j sur l'axe d'indice i. Fs0 est le résidu attendu exprimé en hertz (ou en m.s⁻¹ si on fait le calcul en termes de vitesse.)

Dans le cas où on a un unique axe de redondance, la cohérence individuelle est égale à la cohérence ou cohérence globale COHj du vecteur candidat d'indice j.

On fait une analyse de vraisemblance à partir des cohérences COH de chaque vecteur vitesse candidat afin de déterminer le vecteur vitesse de l'aéronef, appelé vecteur vitesse mesuré. Le vecteur vitesse mesuré est le vecteur qui a le maximum de vraisemblance. Avant l'analyse de vraisemblance, on rejette les vecteurs candidats qui ont une cohérence inférieure à un seuil de cohérence prédéterminé. Si tous les vecteurs candidats sont rejetés, la mesure est déclarée invalide ou une mesure dégradée est fournie avec un indicateur de défaut adapté.

Sinon, pour les vecteurs candidats non rejetés, on fait une analyse de vraisemblance classique dont un exemple non limitatif est donné ci-après. Lorsqu'un vecteur candidat $\vec{Vc}$ a une cohérence COH plus élevée que les autres vecteurs candidats et que l'écart entre la cohérence COH de ce vecteur vitesse candidat et la cohérence COH la plus proche est supérieur à un seuil prédéterminé, le vecteur candidat dont la cohérence COH est la plus élevée est le vecteur vitesse dont la vraisemblance est maximale.

Lorsque l'écart entre la cohérence COH la plus élevée et la cohérence COH la plus proche, est inférieur à un seuil d'écart de cohérence prédéterminé, le vecteur vitesse mesuré résulte de la moyenne des vecteurs candidats suivants : le vecteur vitesse candidat qui a la cohérence la plus élevée et les vecteurs vitesse candidats qui ont une cohérence s'écartant de la cohérence la plus élevée d'une valeur inférieure au seuil d'écart de cohérence. La moyenne est pondérée en fonction de la cohérence COH de chacun desdits vecteurs vitesse candidats sélectionnés.

En variante, on ne rejette pas de vecteurs candidats, on fait l'analyse de vraisemblance pour tous les vecteurs candidats.

Dans le mode de réalisation représenté sur la figure 5, le vecteur vitesse mesuré est le premier vecteur vitesse candidat $\vec{Vc}1$.

Avantageusement, on pondère la cohérence des vecteurs candidats en fonction de critères supplémentaires pris isolément ou de façon combinée avant d'effectuer l'analyse de vraisemblance.

Par exemple, on tient compte des vecteurs vitesse mesurés à un ou plusieurs instants précédents en pondérant, préalablement à l'analyse de vraisemblance, la cohérence COH des vecteurs vitesse candidats en fonction d'un ou de plusieurs vecteurs mesurés antérieurement. A cet effet, on pondère par exemple la cohérence d'un vecteur candidat en fonction de l'écart entre celui-ci et le (ou les) vecteur(s) mesuré(s) antérieurement. On favorise un vecteur candidat qui est proche des vecteurs vitesse mesurés à l'instant précédent par rapport à un vecteur candidat éloigné en multipliant sa cohérence par un facteur de pondération plus important. Dans un autre exemple, on pondère la cohérence d'un vecteur candidat au moyen d'un facteur F de pondération dépendant d'une estimation du vecteur vitesse $\vec{Ve}$ à l'instant donné réalisée à partir d'un ou de plusieurs vecteurs vitesse mesurés antérieurement et éventuellement d'un intervalle de confiance I attribué à l'estimé. On estime par exemple, le vecteur vitesse à l'instant donnée au moyen d'un filtre de Kalman.

Le facteur de pondération est par exemple égal à $F = e^{\frac{(Vc-Ve)^2}{I}}$

Dans le cas d'un traitement différé, on peut en outre pondérer la cohérence des vecteurs candidats en fonction des vecteurs vitesse mesurés postérieurement. On peut en outre se baser sur des vecteurs vitesse calculés à partir d'autres types d'informations (par exemple, des informations inertielles ou des informations issues de satellites) pour pondérer les cohérences.

On associe un indicateur de qualité au vecteur vitesse mesuré $\vec{V}$. Cet indicateur de qualité correspond à la probabilité que la précision et/ou l'intégrité de la mesure de vitesse soient dans un intervalle de performance prédéterminé. L'indicateur de qualité est, par exemple, basé sur la valeur de la cohérence du vecteur candidat sélectionné. Plus la cohérence du vecteur candidat est importante, meilleur est l'indicateur de qualité.

Dans le premier mode de réalisation, lorsqu'il y a plus d'un axe de redondance, les axes de calcul sont les axes de redondance. On projette les vecteurs candidats sur tous les axes de redondance. On calcule la cohérence COHji individuelle des vecteurs vitesse candidats sur chacun des axes de redondance j. La cohérence COHj d'un vecteur candidat, appelée cohérence globale est le produit des cohérences individuelles.

Dans un deuxième mode de réalisation de l'invention, on sélectionne, comme dans le premier mode de réalisation, des raies sur chacun des axes de visée X1, X2, X3, X4. On construit ensuite tous les ensembles possibles de raies à M dimensions. La dimension M est au moins égal à 4 et égal au nombre d'axes présentant au moins une raie. Chaque raie d'un ensemble est prise sur un axe de visée différent des autres raies de l'ensemble. On cherche à former des ensembles de N raies (correspondant à une raie sur chaque axe) mais si un axe est dépourvu de raies, on cherche à former toutes les combinaisons de N-1 raies. Ce mode de réalisation n'est pas réalisable si moins de quatre axes présentent au moins une raie identifiée. Dans ce cas, la mesure de vitesse est indisponible.

Dans le cas où on a 4 axes de visée dont 3 comprennent une raie et 1 comprend 2 raies, on forme deux ensembles de raies à 4 dimensions. A partir de chaque ensemble de raies, on construit un vecteur candidat à 3 dimensions par une méthode classique de résolution aux moindres carrés. On passe ainsi d'un espace à M dimensions à un vecteur à 3 dimensions qui minimise les écarts entre l'ensemble M et le vecteur à 3 dimension. On utilise par exemple une méthode classique de résolution aux moindres carrés.

Autrement dit, le deuxième mode de réalisation revient à sélectionner des axes de base qui sont des axes de visée sur lesquels on a identifié au moins une raie, et à construire des vecteurs candidats à partir des raies identifiées sur ces axes de base.

Dans ce mode de réalisation, les axes de calcul sont les axes de visée. On projette les vecteurs candidats sur tous les axes de visée et on attribue éventuellement, à chaque projection, un signal attendu. On calcule ensuite la cohérence COH des vecteurs candidats qui sont les produits, effectués sur tous les axes de visée, des cohérences individuelles des vecteurs sur chaque axe de visée. Les cohérences individuelles sont calculées de la même manière que dans le premier mode de réalisation. Le vecteur vitesse mesuré est ensuite obtenu en faisant une analyse de vraisemblance éventuellement précédée d'une pondération des cohérences similaire à l'analyse effectuée dans le premier mode de réalisation.

Dans les deux premiers modes de réalisation, les vecteurs candidats sont construits à partir des raies identifiées sur les axes de base. Ces modes de réalisation permettent donc, en utilisant uniquement 4 axes de mesure, de détecter mais aussi d'identifier un vecteur candidat incohérent. Ceci est rendu possible car on ne sélectionne pas une seule raie parmi plusieurs raies sur les spectres des axes de base pour construire le vecteur candidat. Chacune des raies identifiés est utilisée pour construire les vecteurs candidats. Cela revient à mettre à profit l'incertitude due au fait qu'il peut y avoir plusieurs raies sur un axe pour lever l'ambiguïté apportée par ces raies. On est ainsi capable de disposer d'informations supplémentaires (partiellement liées) mais suffisantes, avec les algorithmes proposés, pour atteindre l'objectif de sélectivité spatiale.

Le calcul de vitesse présente ainsi une bonne disponibilité et une bonne précision dans un environnement inhomogène en termes de vitesse.

Dans un troisième mode de réalisation selon l'invention, on se base sur le fait que le vecteur vitesse $\vec{V}$ de l'avion ne varie pas brusquement. Les vecteurs vitesse candidats $\vec{Vc}$ à un instant donné t se trouvent dans un volume d'incertitude dont le contour est défini en fonction du vecteur vitesse calculé à l'instant précédent t - $\Delta$t. On estime par exemple le volume d'incertitude à partir d'au moins une mesure de vitesse précédente par propagation, par exemple à partir d'un filtre de Kalman.

En variante, l'estimation du volume d'incertitude est réalisée en outre à partir d'informations sur la dynamique du porteur (par exemple des informations inertielles qui fournissent des mesures peu bruitées.) On obtient ainsi une meilleure estimée du volume d'incertitude.

On découpe le volume d'incertitude en vecteurs vitesse candidats au moyen par exemple de l'une des deux méthodes classiques suivante :

- tirage aléatoire dans le volume d'incertitude (méthode dite « particulaire ».) Cette méthode conduit à un très grand nombre de vecteurs candidats.

- espacement régulier (méthode à grille). L'espacement des vecteurs candidats dépend de la turbulence de l'air. Par exemple, on choisit la turbulence minimale attendue afin de bien couvrir le domaine d'incertitude. Cette méthode conduit à un moins grand nombre de vecteurs candidats que la précédente.

Dans ce mode de réalisation les axes de calcul sont les axes de visée. On projette les vecteurs candidats sur tous les axes de visée. On calcule une cohérence COH de chaque vecteur candidat. La cohérence d'un vecteur candidat est égal au produit effectué sur les N axes de visée, des cohérences individuelles.

La cohérence individuelle COHij entre un vecteur candidat d'indice j et le spectre du signal rétrodiffusé sur un axe de visée d'indice i est calculée à partir du spectre du signal rétrodiffusé sur l'axe i et de la projection du vecteur candidat j sur cet axe i. Elle est donnée par la formule suivante.

$$COHij = \prod_{1}^{N} \exp(-\frac{Rij}{Ps})$$

Ps est seuil de puissance attendu.

Rij est la densité spectrale de puissance du signal rétrodiffusé sur l'axe d'indice i à la fréquence (ou vitesse) de la projection du vecteur d'indice j sur l'axe d'indice i.

Cette méthode permet de déterminer avec précision quel est le bon vecteur candidat car on ne sélectionne pas de raies sur les spectres en vue d'identifier le vecteur candidat le plus cohérent. On utilise le spectre du signal rétrodiffusé en tant que tel. Le calcul de vitesse présente ainsi une bonne disponibilité et une bonne précision dans un environnement inhomogène en termes de vitesse.

On fait ensuite une analyse de vraisemblance, avec éventuellement une pondération préalable des cohérences, similaire à celle qui a été effectuée dans le premier mode de réalisation pour déterminer le vecteur vitesse mesuré.

Avantageusement, le troisième mode de réalisation peut être initialisé par un des deux premiers modes de réalisation. Dans ce cas, les mesures de vitesse effectuées aux instants précédents sont calculées à partir d'un des procédés selon le premier ou le deuxième mode de réalisation. Ces mesures initialisent le filtre de propagation pour l'estimation du volume d'incertitude à un instant donné.

Le troisième mode de réalisation n'utilisant pas de seuil sur les spectres des signaux sur les différents axes, fonctionne avec des signaux plus faibles mais au prix d'une puissance de calcul plus grande, que les premiers modes de réalisation. La puissance de calcul est d'autant plus grande que l'estimée précédente est mauvaise.

**Revendications**

1. Procédé de mesure de la vitesse d'un aéronef (1) à un instant donné, par anémométrie laser Doppler, ledit procédé comprenant les étapes suivantes :

   • acquisition d'un signal rétrodiffusé sur au moins quatre axes de visée (X1,X2, X3, X4) non colinéaires et non confondus, **caractérisé en ce que** le procédé comprend en outre les étapes suivantes :
   • calcul du spectre du signal rétrodiffusé sur les axes de visée (X1, X2, X3, X4),
   • calcul de plusieurs vecteurs vitesse candidats

($\vec{Vc}$) à partir des raies identifiées, à partir d'un critère de sélection prédéterminé, sur les spectres des signaux rétrodiffusés sur trois premiers axes de visée, appelés axes de base, et étant pris parmi les axes de visée,

• calcul des projections des vecteurs candidats sur chaque axe de visée (X1, X2, X3, X4), appelé axe de calcul, autre que les trois premiers axes de visée,

• calcul des cohérences des vecteurs candidats ($\vec{Vc}$) en fonction de leurs projections sur chaque axe de calcul et en fonction du spectre du signal rétrodiffusé sur chaque axe de calcul (X1, X2, X3, X4),

• choix du vecteur vitesse mesuré ($\vec{V}$) parmi les vecteurs vitesse candidats ($\vec{Vc}$) en faisant une analyse de vraisemblance à partir des cohérences desdits vecteurs vitesse candidats ($\vec{Vc}$).

**2.** Procédé de mesure de la vitesse d'un aéronef selon la revendication précédente, comprenant une étape de sélection desdits trois premiers axes de visée parmi les axes de visée à partir d'un critère de sélection prédéterminé.

**3.** Procédé de mesure de la vitesse d'un aéronef (1) à un instant donné, par anémométrie laser Doppler, ledit procédé comprenant les étapes suivantes :

• acquisition d'un signal rétrodiffusé sur au moins quatre axes de visée (X1, X2, X3, X4) non coplanaires et non confondus, **caractérisé en ce que** le procédé comprend en outre les étapes suivantes :

• calcul du spectre du signal rétrodiffusé sur les axes de visée (X1, X2, X3, X4),

• calcul de plusieurs vecteurs vitesse candidats ($\vec{Vc}$) à partir des raies identifiées, à partir d'un critère de sélection prédéterminé, sur les spectres des signaux rétrodiffusés sur des axes de base qui sont les axes de visée,

• calcul des projections des vecteurs candidats sur des axes de calcul qui sont les axes de visée,

• calcul des cohérences des vecteurs candidats ($\vec{Vc}$) en fonction de leurs projections sur chaque axe de calcul et en fonction du spectre du signal rétrodiffusé sur chaque axe de calcul (X1, X2, X3, X4),

• choix du vecteur vitesse mesuré ($\vec{V}$) parmi les vecteurs vitesse candidats ($\vec{Vc}$) en faisant une analyse de vraisemblance à partir des cohérences desdits vecteurs vitesse candidats ($\vec{Vc}$), dans lequel on construit les vecteurs candidats en:

• construisant des ensembles de raies présentant une dimension (M) au moins égale à 4 et égale au nombre d'axes de visée sur lesquels on a identifié au moins une raie, chaque raie d'un ensemble étant prise sur un axe de visée différent des autres raies dudit ensemble,

• construisant, à partir de chaque ensemble de raies, un vecteur candidat correspondant à un vecteur tridimensionnel qui minimise les écarts avec ledit ensemble de raies.

**4.** Procédé de mesure de la vitesse d'un aéronef (1) selon la revendication précédente, dans lequel on construit un vecteur candidat, à partir d'un ensemble de raies, en mettant en oeuvre une méthode de résolution aux moindres carrés.

**5.** Procédé de mesure de la vitesse d'un aéronef (1) selon l'une quelconque des revendications précédentes, **caractérisé en ce que** l'étape de calcul de la cohérence d'un vecteur candidat comprend les étapes suivantes:

• projection du vecteur candidat sur chaque axe de calcul,

• calcul de la cohérence individuelle entre le vecteur candidat et le signal rétrodiffusé sur chaque axe de calcul à partir de la projection du vecteur vitesse candidat sur chaque axe de calcul et du spectre du signal rétrodiffusé sur chaque axe de calcul.

• calcul du produit des cohérences individuelles, s'il y a plusieurs axes de calcul.

**6.** Procédé de mesure de la vitesse d'un aéronef (1) selon l'une quelconque des revendications précédentes, dans lequel on attribue un indicateur de confiance au vecteur vitesse mesuré ($\vec{V}$).

**7.** Procédé de mesure de la vitesse d'un aéronef (1) selon l'une quelconque des revendications 5 à 6, comprenant une étape d'attribution à chaque projection d'un vecteur candidat sur un axe de calcul, d'un signal attendu centré sur la projection du vecteur candidat sur ledit axe de calcul et en ce que la cohérence individuelle d'un vecteur candidat sur un axe de calcul est calculée à partir du spectre du signal rétrodiffusé sur l'axe de calcul et à partir du signal attendu.

**8.** Procédé de mesure de la vitesse d'un aéronef (1) selon la revendication précédente, dans lequel la cohérence individuelle entre le vecteur candidat et le signal rétrodiffusé sur ledit axe de calcul est égale à la corrélation entre le signal attendu sur l'axe de calcul et le spectre du signal rétrodiffusé sur l'axe de redondance Xi.

**9.** Procédé de mesure de la vitesse d'un aéronef (1) selon l'une quelconque des revendications 5 à 8, dans lequel la cohérence individuelle entre le vecteur candidat et le signal rétrodiffusé sur ledit axe de calcul est calculée par une méthode des moindre carrés.

**10.** Procédé de mesure de la vitesse d'un aéronef (1) à un instant donné, par anémométrie laser Doppler, ledit procédé comprenant les étapes suivantes :

    • acquisition d'un signal rétrodiffusé sur quatre axes de visée (X1,X2, X3, X4),non coplanaires et non confondus, **caractérisé en ce que** le procédé comprend en outre les étapes suivantes :
    • calcul du spectre du signal rétrodiffusé sur chacun des axes de visée (X1, X2, X3, X4),
    • calcul de plusieurs vecteurs vitesse candidats ($\vec{Vc}$),
    • calcul des projections des vecteurs candidats sur au moins un axe de visée (X1, X2, X3, X4), appelé(s) axe(s) de calcul,
    • calcul des cohérences des vecteurs candidats ($\vec{Vc}$) à partir de la projection du vecteur vitesse candidat sur chaque axe de calcul et du spectre du signal rétrodiffusé sur chaque axe de calcul,),
    • choix du vecteur vitesse mesuré ($\vec{V}$) parmi les vecteurs vitesse candidats ($\vec{Vc}$) en faisant une analyse de vraisemblance à partir des cohérences desdits vecteurs vitesse candidats ($\vec{Vc}$), dans lequel les axes de calcul sont les axes de visée et dans lequel on obtient les vecteurs candidats en déterminant un volume d'incertitude à partir d'au moins un vecteur vitesse de l'aéronef calculé antérieurement à l'instant donné, en découpant le volume d'incertitude en vecteurs candidats et **en ce que** la cohérence individuelle entre un vecteur candidat d'indice j et le signal rétrodiffusé sur un axe de visée d'incide i est calculée à partir d'un seuil de puissance attendu Ps et de la densité spectrale de puissance Rij du spectre du signal rétrodiffusé sur l'axe d'indice i à la fréquence de la projection du vecteur candidat d'indice j sur l'axe d'indice i à partir de la formule suivante :

$$COHij = \prod_{1}^{N} \exp(-\frac{Rij}{Ps}),$$ l'étape de calcul de la cohérence d'un vecteur candidat comprend l'étape suivante:

    • calcul de la cohérence individuelle entre le vecteur candidat et le signal rétrodiffusé sur chaque axe de calcul à partir de la projection du vecteur vitesse candidat sur chaque axe de calcul et du spectre du signal rétrodiffusé sur chaque axe de calcul,
    • calcul du produit des cohérences individuelles, s'il y a plusieurs axes de calcul.

**11.** Procédé de mesure de la vitesse d'un aéronef (1) selon la revendication 10, dans lequel on attribue un indicateur de confiance au vecteur vitesse mesuré ($\vec{V}$).

**12.** Procédé de mesure de la vitesse d'un aéronef (1) selon l'une quelconque des revendications 10 à 11, dans lequel le volume d'incertitude est calculé au moyen d'un filtre de Kalman.

**13.** Procédé de mesure de la vitesse d'un aéronef (1) selon l'une quelconque des revendications 10 à 11, dans lequel le volume d'incertitude dépend d'informations sur la dynamique de l'aéronef.

**14.** Procédé de mesure de la vitesse d'un aéronef (1) selon l'une quelconque des revendications 10 à 12, **caractérisé en ce que** le(s) vecteur(s) vitesse calculé antérieurement est (ou sont) calculé(s) en mettant en oeuvre le procédé selon l'une quelconque des revendications 1 à 9.

**Patentansprüche**

**1.** Verfahren zum Messen der Geschwindigkeit eines Luftfahrzeugs (1) zu einem gegebenen Augenblick durch Laser-Doppler-Anemometrie, wobei das Verfahren die folgenden Schritte beinhaltet:

    • Erfassen eines auf wenigstens vier nicht kollinearen und nicht zusammenfallenden Visierachsen (X1, X2, X3, X4) zurückgestreuten Signals,
    **dadurch gekennzeichnet, dass** das Verfahren ferner die folgenden Schritte beinhaltet:
    • Berechnen des Spektrums des auf den Visierachsen (X1, X2, X3, X4) zurückgestreuten Signals;
    • Berechnen mehrerer Geschwindigkeitsvektorkandidaten ($\vec{Vc}$) auf der Basis von identifizierten Linien, auf der Basis eines vorbestimmten Auswahlkriteriums, auf den auf drei ersten Visierachsen zurückgestreuten Signalspektren, Basisachsen genannt, die von den Visierachsen genommen werden;
    • Berechnen von Projektionen der Vektorkandidaten auf jeder Visierachse (X1, X2, X3, X4), Rechenachse genannt, mit Ausnahme der drei ersten Visierachsen;
    • Berechnen von Kohärenzen der Vektorkandidaten ($\vec{Vc}$) in Abhängigkeit von ihren Projektionen auf jeder Rechenachse und in Abhängigkeit vom Spektrum des auf jeder Rechenachse (X1, X2, X3, X4) zurückgestreuten Signals;
    • Auswählen des gemessenen Geschwindigkeitsvektors ($\vec{V}$) aus den Geschwindigkeitsvektorkandidaten ($\vec{Vc}$) mittels einer Wahrscheinlichkeitsanalyse auf der Basis der Kohärenzen der Geschwindigkeitsvektorkandidaten ($\vec{Vc}$).

**2.** Verfahren zum Messen der Geschwindigkeit eines Luftfahrzeugs nach dem vorherigen Anspruch, das einen Schritt des Auswählens der drei ersten Visierachsen aus den Visierachsen auf der Basis eines vorbestimmten Auswahlkriteriums beinhaltet.

**3.** Verfahren zum Messen der Geschwindigkeit eines Luftfahrzeugs (1) zu einem gegebenen Augenblick durch Laser-Doppler-Anemometrie, wobei das Verfahren die folgenden Schritte beinhaltet:

• Erfassen eines auf wenigstens vier nicht koplanaren und nicht zusammenfallenden Visierachsen (X1, X2, X3, X4) zurückgestreuten Signals,
**dadurch gekennzeichnet, dass** das Verfahren ferner die folgenden Schritte beinhaltet:
• Berechnen des Spektrums des auf den Visierachsen (X1, X2, X3, X4) zurückgestreuten Signals;
• Berechnen mehrerer Geschwindigkeitsvektorkandidaten ($\vec{Vc}$) auf der Basis von identifizierten Linien, auf der Basis eines vorbestimmten Auswahlkriteriums, auf den Spektren von Signalen, die auf Basisachsen zurückgestreut werden, die die Visierachsen sind;
• Berechnen von Projektionen der Vektorkandidaten auf Rechenachsen, die die Visierachsen sind;
• Berechnen von Kohärenzen der Vektorkandidaten ($\vec{Vc}$) in Abhängigkeit von ihren Projektionen auf jeder Rechenachse und in Abhängigkeit vom Spektrum des auf jeder Rechenachse (X1, X2, X3, X4) zurückgestreuten Signals;
• Auswählen des gemessenen Geschwindigkeitsvektors ($\vec{V}$) aus den Geschwindigkeitsvektorkandidaten ($\vec{Vc}$) mittels einer Wahrscheinlichkeitsanalyse auf der Basis von Kohärenzen der Geschwindigkeitsvektorkandidaten ($\vec{Vc}$), wobei die Vektorkandidaten konstruiert werden durch:
• Konstruieren von Sätzen von Linien mit einer Dimension (M), die wenigstens gleich 4 und gleich der Anzahl von Visierachsen ist, auf denen wenigstens eine Linie identifiziert wurde, wobei jede Linie eines Satzes auf einer Visierachse genommen wird, die sich von den anderen Linien des Satzes unterscheidet;
• Konstruieren, auf der Basis jedes Satzes von Linien, eines Vektorkandidaten, der einem dreidimensionalen Vektor entspricht, der die Abweichungen von dem Satz von Linien minimiert.

**4.** Verfahren zum Messen der Geschwindigkeit eines Luftfahrzeugs (1) nach dem vorherigen Anspruch, wobei ein Vektorkandidat auf der Basis eines Satzes von Linien durch Implementieren eines Kleinste-Quadrate-Auflösungsveifahrens konstruiert wird.

**5.** Verfahren zum Messen der Geschwindigkeit eines Luftfahrzeugs (1) nach einem der vorherigen Ansprüche, **dadurch gekennzeichnet, dass** der Schritt des Berechnens der Kohärenz eines Vektorkandidaten die folgenden Schritte beinhaltet:

• Projizieren des Vektorkandidaten auf jede Rechenachse;
• Berechnen der individuellen Kohärenz zwischen dem Vektorkandidaten und dem auf jeder Rechenachse zurückgestreuten Signals auf der Basis der Projektion des Geschwindigkeitsvektorkandidaten auf jeder Rechenachse und des Spektrums des auf jeder Rechenachse zurückgestreuten Signals;
• Berechnen des Produkts aus den individuellen Kohärenzen, wenn es mehrere Rechenachsen gibt.

**6.** Verfahren zum Messen der Geschwindigkeit eines Luftfahrzeugs (1) nach einem der vorherigen Ansprüche, wobei dem gemessenen Geschwindigkeitsvektor ($\vec{V}$) ein Konfidenzindikator zugeordnet wird.

**7.** Verfahren zum Messen der Geschwindigkeit eines Luftfahrzeugs (1) nach einem der Ansprüche 5 bis 6, das einen Schritt des Zuweisens, zu jeder Projektion eines Vektorkandidaten auf einer Rechenachse, eines erwarteten Signals beinhaltet, das auf der Projektion des Vektorkandidaten auf die Rechenachse zentriert ist, und dadurch, dass die individuelle Kohärenz eines Vektorkandidaten auf einer Rechenachse auf der Basis des Spektrums des auf der Rechenachse zurückgestreuten Signals und auf der Basis des erwarteten Signals berechnet wird.

**8.** Verfahren zum Messen der Geschwindigkeit eines Luftfahrzeugs (1) nach dem vorherigen Anspruch, wobei die individuelle Kohärenz zwischen dem Vektorkandidaten und dem auf der Rechenachse zurückgestreuten Signal gleich der Korrelation zwischen dem erwarteten Signal auf der Rechenachse und dem Spektrum des auf der Redundanzachse Xi zurückgestreuten Signals ist.

**9.** Verfahren zum Messen der Geschwindigkeit eines Luftfahrzeugs (1) nach einem der Ansprüche 5 bis 8, wobei die individuelle Kohärenz zwischen dem Vektorkandidaten und dem auf der Rechenachse zurückgestreuten Signal mit einem Kleinste-Quadrate-Verfahren berechnet wird.

**10.** Verfahren zum Messen der Geschwindigkeit eines Luftfahrzeugs (1) zu einem gegebenen Augenblick durch Laser-Doppler-Anemometrie, wobei das Verfahren die folgenden Schritte beinhaltet:

• Erfassen eines auf vier nicht koplanaren und nicht zusammenfallenden Visierachsen (X1, X2, X3, X4) zurückgestreuten Signals, **dadurch gekennzeichnet, dass** das Verfahren ferner die folgenden Schritte beinhaltet:
• Berechnen des Spektrums des auf jeder der Visierachsen (X1, X2, X3, X4) zurückgestreuten Signals;
• Berechnen mehrerer Geschwindigkeitsvektorkandidaten ($\vec{Vc}$);
• Berechnen von Projektionen von Vektorkandidaten auf wenigstens einer Visierachse (X1, X2, X3, X4), Rechenachse(n) genannt;
• Berechnen von Kohärenzen der Vektorkandidaten ($\vec{Vc}$) auf der Basis der Projektion des Geschwindigkeitsvektorkandidaten auf jeder Rechenachse und des Spektrums des auf jeder Rechenachse zurückgestreuten Signals;
• Auswählen des gemessenen Geschwindigkeitsvektors ($\vec{V}$) aus den Geschwindigkeitsvektorkandidaten ($\vec{Vc}$) mittels einer Wahrscheinlichkeitsanalyse auf der Basis der Kohärenzen der Geschwindigkeitsvektorkandidaten ($\vec{Vc}$), wobei die Rechenachsen die Visierachsen sind und wobei die Vektorkandidaten durch Ermitteln eines Unsicherheitsvolumens auf der Basis von wenigstens einem Geschwindigkeitsvektor des Luftfahrzeugs, berechnet vor dem gegebenen Augenblick, durch Unterteilen des Unsicherheitsvolumens in Vektorkandidaten erhalten werden, und dadurch, dass die individuelle Kohärenz zwischen einem Vektorkandidaten von Index j und dem auf einer Visierachse zurückgestreuten Signal von Index i auf der Basis einer erwarteten Leistungsschwelle Ps und der Spektralleistungsdichte Rij des Spektrums des auf der Achse von Index i zurückgestreuten Signals mit der Frequenz der Projektion des Vektorkandidaten von Index j auf der Indexachse i auf der Basis der folgenden Formel berechnet wird:

$$COHij = \prod_{i}^{N} \exp(-\frac{Rij}{Ps})$$, wobei der Schritt des Berechnens der Kohärenz eines Vektorkandidaten die folgenden Schritte beinhaltet:
• Berechnen der individuellen Kohärenz zwischen dem Vektorkandidaten und dem auf jeder Rechenachse zurückgestreuten Signal auf der Basis der Projektion des Geschwindigkeitsvektorkandidaten auf jeder Rechenachse und des Spektrums des auf jeder Rechenachse zurückgestreuten Signals;
• Berechnen des Produkts der individuellen Kohärenzen, wenn es mehrere Rechenachsen gibt.

11. Verfahren zum Messen der Geschwindigkeit eines Luftfahrzeugs (1) nach Anspruch 10, wobei dem gemessenen Geschwindigkeitsvektor ($\vec{V}$) ein Konfidenzindikator zugeordnet wird.

12. Verfahren zum Messen der Geschwindigkeit eines Luftfahrzeugs (1) nach einem der Ansprüche 10 bis 11, wobei das Unsicherheitsvolumen durch ein Kalman-Filter berechnet wird.

13. Verfahren zum Messen der Geschwindigkeit eines Luftfahrzeugs (1) nach einem der Ansprüche 10 bis 11, wobei das Unsicherheitsvolumen von Informationen über die Dynamik des Luftfahrzeugs abhängt.

14. Verfahren zum Messen der Geschwindigkeit eines Luftfahrzeugs (1) nach einem der Ansprüche 10 bis 12, **dadurch gekennzeichnet, dass** die ein oder mehreren zuvor berechneten Geschwindigkeitsvektor(en) durch Ausführen des Verfahrens nach einem der Ansprüche 1 bis 9 berechnet wird/werden.

## Claims

1. A method for measuring the speed of an aircraft (1) at a given instant by laser Doppler anemometry, said method comprising the following steps:

• acquiring a signal backscattered on at least four non-collinear and non-coincident axes of sight (X1, X2, X3, X4), **characterised in that** said method further comprises the following steps:
• computing the spectrum of the signal backscattered on the axes of sight (X1, X2, X3, X4);
• computing a plurality of candidate speed vectors ($\vec{Vc}$) on the basis of identified lines, based on a predetermined selection criterion, on the spectra of signals backscattered on three first axes of sight, referred to as base axes, and being taken from among the axes of sight;
• computing projections of the candidate vectors on each axis of sight (X1, X2, X3, X4), referred to as computation axis, other than the three first axes of sight;
• calculating coherencies of the candidate vectors ($\vec{Vc}$) as a function of their projections on each computation axis and as a function of the spectrum of the signal backscattered on each computation axis (X1, X2, X3, X4);
• selecting the measured speed vector ($\vec{V}$) from the candidate speed vectors ($\vec{Vc}$) by undertaking a likelihood analysis on the basis of the coherencies of said candidate speed vectors ($\vec{Vc}$).

2. The method for measuring the speed of an aircraft according to the preceding claim, comprising a step of selecting said three first axes of sight from the axes of sight on the basis of a predetermined selection criterion.

3. The method for measuring the speed of an aircraft (1) at a given instant by laser Doppler anemometry, said method comprising the following steps:

• acquiring a signal backscattered on at least four non-coplanar and non-coincident axes of sight (X1, X2, X3, X4), **characterised in that** said method further comprises the following steps:
• computing the spectrum of the signal backscattered on the axes of sight (X1, X2, X3, X4);
• computing a plurality of candidate speed vectors ($\vec{V}c$) on the basis of identified lines, based on a predetermined selection criterion, on the spectra of signals backscattered on base axes, which are the axes of sight;
• computing projections of the candidate vectors on computation axes that are the axes of sight;
• computing coherencies of the candidate vectors ($\vec{V}c$) as a function of their projections on each computation axis and as a function of the spectrum of the signal backscattered on each computation axis (X1, X2, X3, X4);
• selecting the measured speed vector ($\vec{V}$) from the candidate speed vectors ($\vec{V}c$) by undertaking a likelihood analysis on the basis of the coherencies of said candidate speed vectors ($\vec{V}c$), in which the candidate vectors are constructed by:
• constructing sets of lines having a dimension (M) that is at least equal to 4 and equal to the number of axes of sight on which at least one line has been identified, with each line of a set being taken on an axis of sight different to the other lines of said set;
• constructing, on the basis of each set of lines, a candidate vector corresponding to a three-dimensional vector that minimises the differences with said set of lines.

4. The method for measuring the speed of an aircraft (1) according to the preceding claim, wherein a candidate vector is constructed on the basis of a set of lines by implementing a least-squares resolution method.

5. The method for measuring the speed of an aircraft (1) according to any one of the preceding claims, **characterised in that** said step of computing the coherence of a candidate vector comprises the following steps:

• projecting the candidate vector onto each computation axis;
• computing the individual coherence between the candidate vector and the signal backscattered on each computation axis, on the basis of the projection of the candidate speed vector on each computation axis and of the spectrum of the signal backscattered on each computation axis;
• calculating the product of the individual coherencies if there is a plurality of computation axes.

6. The method for measuring the speed of an aircraft (1) according to any one of the preceding claims, wherein a confidence indicator is assigned to the measured speed vector ($\vec{V}$).

7. The method for measuring the speed of an aircraft (1) according to any one of claims 5 to 6, comprising a step of assigning, to each projection of a candidate vector on a computation axis, an expected signal centred on the projection of the candidate vector onto said computation axis, and in that the individual coherence of a candidate vector on a computation axis is computed on the basis of the spectrum of the signal backscattered on the computation axis and on the basis of the expected signal.

8. The method for measuring the speed of an aircraft (1) according to the preceding claim, wherein the individual coherence between the candidate vector and the signal backscattered on said computation axis is equal to the correlation between the signal expected on the computation axis and the spectrum of the signal backscattered on the redundancy axis Xi.

9. The method for measuring the speed of an aircraft (1) according to any one of claims 5 to 8, wherein the individual coherence between the candidate vector and the signal backscattered on said computation axis is computed by a least-squares method.

10. The method for measuring the speed of an aircraft (1) at a given instant by laser Doppler anemometry, said method comprising the following steps:

• acquiring a signal backscattered on four non-coplanar and non-coincident axes of sight (X1, X2, X3, X4), **characterised in that** said method further comprises the following steps:
• computing the spectrum of the signal backscattered on each of the axes of sight (X1, X2, X3, X4);
• computing a plurality of candidate speed vectors ($\vec{V}c$);
• computing projections of candidate vectors on at least one axis of sight (X1, X2, X3, X4), referred to as computation axis/axes;
• computing coherencies of the candidate vectors ($\vec{V}c$) on the basis of the projection of the candidate speed vector on each computation axis and on the spectrum of the signal backscattered on each computation axis;

• selecting the measured speed vector ($\vec{V}$) from the candidate speed vectors ($\vec{Vc}$) by undertaking a likelihood analysis on the basis of the coherencies of said candidate speed vectors ($\vec{Vc}$), wherein the computation axes are the axes of sight and wherein the candidate vectors are obtained by determining a volume of uncertainty on the basis of at least one speed vector of the aircraft computed prior to the given instant, by splitting the volume of uncertainty into candidate vectors, and **in that** the individual coherence between a candidate vector of index j and the signal backscattered on an axis of sight of index i is computed on the basis of an expected power threshold Ps and of the spectral power density Rij of the spectrum of the signal backscattered on the axis of index i at the frequency of the projection of the candidate vector of index j on the axis of index i based on the following formula:

$$COHij = \prod_{1}^{N} \exp(-\frac{Rij}{Ps}),$$ the step of computing the coherence of a candidate vector comprises the following steps:

• computing the individual coherence between the candidate vector and the signal backscattered on each computation axis on the basis of the projection of the candidate speed vector on each computation axis and of the spectrum of the signal backscattered on each computation axis;

• computing the product of the individual coherencies, if there is a plurality of computation axes.

11. The method for measuring the speed of an aircraft (1) according to claim 10, wherein a confidence indicator is assigned to the measured speed vector ($\vec{V}$).

12. The method for measuring the speed of an aircraft (1) according to any one of claims 10 to 11, wherein the volume of uncertainty is computed through a Kalman filter.

13. The method for measuring the speed of an aircraft (1) according to any one of claims 10 to 11, wherein the volume of uncertainty depends on information relating to the dynamics of the aircraft.

14. The method for measuring the speed of an aircraft (1) according to any one of claims 10 to 12, **characterised in that** the one or more previously computed speed vectors is/are computed by implementing the method according to any one of claims 1 to 9.

FIG.1

FT1(f)

FTR1$_2$

FTR1$_1$

S

R1$_2$

R1$_1$

f1$_1$  f1$_2$

(f)

FIG.2a

FT2(f)

FTR2$_1$

R2$_1$

f2$_1$

f

FIG.2b

FT3(f)

FTR3$_1$

R3$_1$

f3$_1$

f

FIG.2c

FT4(f)

FTR4$_1$

R4$_1$

f4$_1$

f

FIG.2d

EP 2 270 518 B1

GF(f)

d

x

FIG.3a

β(x)

nuage

d

x

FIG.3b

FT(f)

f

FIG.4a

FT(f)

f

FIG.4b

FIG.5

**EP 2 270 518 B1**